# EUROPÄISCHE PATENTSCHRIFT

(11) **EP 1 055 634 B1**
(45) Veröffentlichungstag und Bekanntmachung des Hinweises auf die Patenterteilung: **19.07.2006**
(21) Anmeldenummer: 00110498.3
(22) Anmeldetag: 17.05.2000
(51) Int. Cl.: B66B 1/30

(54) **Einrichtung zur Energieübertragung auf ein Fahrzeug eines Transportsystems**
Energy transmission device for a vehicle in a transportation system
Dispositif de transmission d'énergie pour un véhicule d'un système de transport

(30) Priorität: 25.05.1999 EP 99810450
(43) Veröffentlichungstag der Anmeldung: 29.11.2000
(73) Patentinhaber: INVENTIO AG, 6052 Hergiswil NW (CH)
(72) Erfinder: Schuster, Kilian, El.-Ing. ETH, 6275 Ballwil (CH)

(56) Entgegenhaltungen:
- WO-A-98/58866
- DE-A- 2 723 889
- DE-C- 19 519 881
- DE-C- 19 705 301
- US-A- 5 501 295
- D'ANGELO G. , DELLI COLLI V., DI STEFANO R., SCARANO M.: "POWER ELECTRONICS FOR PROPULSION AND ENERGY CHARGING OF ELECTRIC VEHICLES BY HIGH SLIP LINEAR INDUCTION MACHINES" POWER ELECTRONICS IN TRANSPORTATION, PROCEEDINGS OF 1998 WORKSHOP ON POWER ELECTRONICS IN TRANSPORTATION., 22. - 23. Oktober 1998, Seiten 37-42, XP002125100 DEARBORN, MI, USA
- ZHANG L F ET AL: "Investigation of laser-induced thermoelectric response in normal state HTS films" PHYSICA C,NL,NORTH-HOLLAND PUBLISHING, AMSTERDAM, Bd. 282-287, Nr. 2003, Seite 1273-1274 XP004120401 ISSN: 0921-4534
- MCSPADDEN J O ET AL: "A NOVEL OSCILLATING RECTENNA FOR WIRELESS MICROWAVE POWER TRANSMISSION" IEEE MTT-S INTERNATIONAL MICROWAVE SYMPOSIUM DIGEST,US,NEW YORK, NY: IEEE, Seite 1161-1164 XP000822166 ISBN: 0-7803-4472-3

## Beschreibung

Die Erfindung betrifft ein Aufzugssystem mit einer Einrichtung zur Energieübertragung auf eine Aufzugskabine, wobei Energie einer stationären Energieversorgung auf die Aufzugskabine mit einem Antrieb für die Fortbewegung der Aufzugskabine übertragbar ist.

Aus der Patentschrift EP 0 048 847 ist eine mittels Linearmotor angetriebene Aufzugskabine bekannt geworden, wobei auf dem Gegengewicht eine zur Speisung des Linearmotors vorgesehene Batterie angeordnet ist. Die Batterie kann zwecks Energieübertragung an einer dafür vorgesehenen Haltestelle ans Netz angedockt werden oder via Solargenerator geladen werden.

Ein Nachteil der bekannten Einrichtung liegt darin, dass die Energieübertragung nicht in jedem Fall gewährleistet ist, weil die Stromabnehmer verschmutzen oder durch das Andocken mechanisch abgenutzt werden.

Mit der Schrift WO 98/58866 ist ein Aufzug mit einem Linearmotorantrieb bekannt geworden. Der Primärteil des Linearmotors ist an der Schachtwand und der Sekundärteil des Linearmotors ist an der Aufzugskabine angeordnet. Der Luftspalt zwischen Primärteil und Sekundärteil wird mittels Druckluft aufrecht erhalten. Die Energie wird dem Sekundärteil per Kabel, Stromschienen, induktiv oder ab Batterie zugeführt.

Aus der Publikation "Power electronics for propulsion and energy charging of electric vehicles by high slip linear induction machines", D'Angelo et al. ist ein Stadtfahrzeug mit Linearmotor bekannt geworden, wobei eine entsprechende Bodeninfrastruktur zur Fortbewegung des Fahrzeuges Voraussetzung ist. Der mit einer Sekundärwicklung ausgerüstete Linearmotor ermöglicht auch eine Energieübertragung auf das Fahrzeug.

Nachteilig ist, dass diese Energieübertragung die Wahl der Linearmotorart einschränkt.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und die Energieversorgung für eine Aufzugskabine eines Aufzugssystems sicherzustellen.

Die durch die Erfindung erreichten Vorteile sind im wesentlichen darin zu sehen, dass mit der wartungsfreien Energieversorgung die Fahrzeuge andauernd und ohne unterhaltsbedingten Unterbruch eingesetzt werden können, was die Leistungsfähigkeit des gesamten Transportsystems wesentlich verbessert. Weiter vorteilhaft ist, dass keine Hänge- oder Schleppkabel notwendig sind. Die Fahrzeuge sind dadurch unabhängiger, haben eine grössere Bewegungsfreiheit und können beliebige Wegstrecken zurücklegen. Ausserdem können die Fahrzeuge auch bei Netzunterbrüchen weiter verkehren.

Im folgenden wird die Erfindung anhand von ein Ausführungsbeispiel darstellenden Zeichnungen näher erläutert.

Es zeigen:
- Fig. 1: eine punktuelle, induktive Energieübertragung zwischen einer stationären Energieversorgung und einem Fahrzeug,
- Fig. 2: Einzelheiten der punktuellen, induktiven Energieübertragung,
- Fig. 3: eine optische Energieübertragung zwischen einer stationären Energieversorgung und einem Fahrzeug und
- Fig. 4: eine Energieübertragung mittels Mikrowellen.

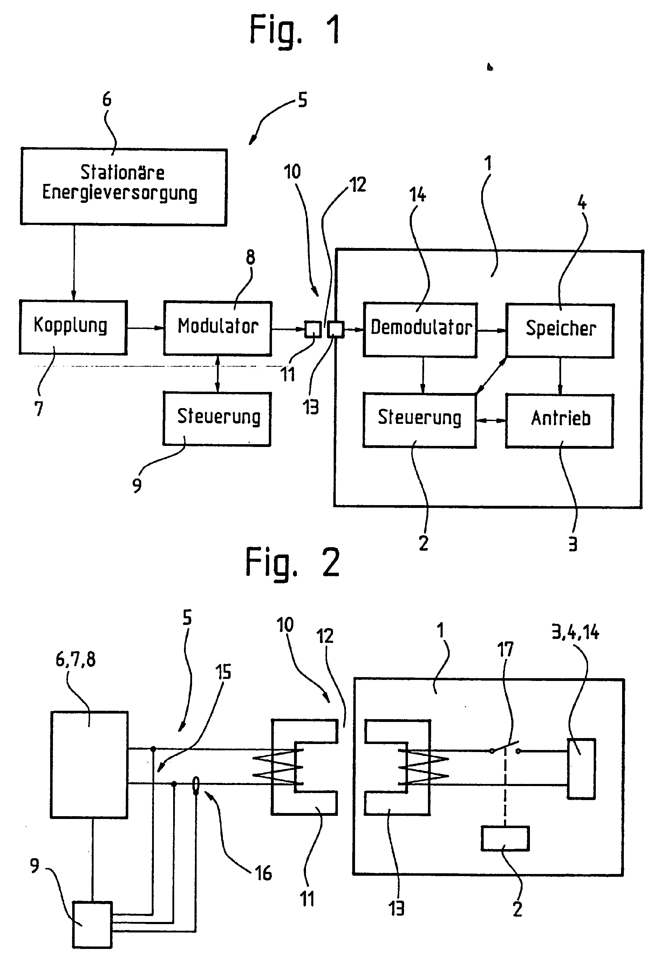

Fig. 1 zeigt ein Ausführungsbeispiel zur drahtlosen Energieübertragung auf ein Fahrzeug 1 eines Transportsystems, welches beispielsweise ein Aufzugssystem mit mindestens einem Aufzugsschacht sein kann, in dem mindestens ein Fahrzeug 1 bzw. mindestens eine Aufzugskabine 1 mit in Sachen Steuerung 2 und Antrieb 3 hoher Autonomie verkehrt, wobei die Fortbewegungsrichtung vertikal und/oder horizontal sein kann. Das Fahrzeug 1 wird mittels des Antriebes 3 fortbewegt. Der Antrieb 3 wird mittels eines Energiespeichers 4 beispielsweise einer Batterie mit elektrischer Energie versorgt. Zum Laden des Energiespeichers 4 während des Stillstandes des Fahrzeuges 1 ist beispielsweise an mindestens einer Haltestelle eine Speiseeinheit 5 vorgesehen, mittels der elektrische Energie von einer stationären Energieversorgung 6, beispielsweise vom öffentlichen Netz oder von einem Solargenerator auf den Energiespeicher 4 übertragen wird. Eine Kopplung 7 stellt die Verbindung zwischen der stationären Energieversorgung 6 und einem Modulator 8 her, der gesteuert von einer Steuerung 9 die Energie frequenzmässig auf ein höheres Niveau bringt und einem Koppeltransformator 10 zuführt. Die Energie wird von einer Primärseite 11 des Koppeltransformators 10 über einen Luftspalt 12 auf eine Sekundärseite 13 übertragen, wobei die Primärseite 11 stationär und die Sekundärseite 13 am Fahrzeug 1 angeordnet ist. Die zwecks Verbesserung der Energiedichte frequenzmässig hochgesetzte Energie wird auf der Fahrzeugseite einem Demodulator 14 zugeführt, der die Energie gesteuert von der Steuerung 2 in eine zur Ladung des Energiespeichers 4 passende Form bringt.

Mit Fig. 2 ist der Ablauf der Energieübertragung im Falle der induktiven Kopplung dargestellt, wobei der Energiefluss selbst als Vorgabe dient. Bei der induktiven Kopplung ist eine Rückwirkung des Fahrzeuges 1 als Energieempfänger auf die Speiseeinheit 5 als Energiesender vorhanden. Seitens des Energiesenders werden die komplexen Spannungen 15 und Ströme 16 gemessen und daraus die Impedanz des Energieempfängers ermittelt. Je kleiner die Impedanz ist, umso mehr Energie wird mittels des Modulators 8 in den Koppeltransformator 10 eingespeist. Seitens des Energieempfängers genügt es, bei Energiebedarf einen Schalter 17 mittels der Steuerung 2 zu schliessen und bei keinem Energiebedarf wieder zu öffnen. Durch Schliessen des Schalters 17 wird der Demodulator 14 mit der Sekundärseite 13 des Koppeltransformators 10 verbunden, wodurch die Lastimpedanz im Betrag wesentlich kleiner wird. Dies wird von der Steuerung 9 der Speiseeinheit 5 registriert und der Energiefluss erhöht. Wird der Schalter 17 geöffnet, so steigt die Lastimpedanz stark an und der Energiefluss wird durch die Steuerung 9 reduziert.

Falls auf der stationären Seite und auf der Fahrzeugseite je eine Modulator-/Demodulatoreinheit vorhanden ist und der Antrieb 3 eine Steuerung und einen Leistungsteil für rekuperativen Betrieb aufweist, kann der Antrieb 3 des Fahrzeugs 1 rekuperativ bremsen, wobei die Bremsenergie in elektrischer Form in den Energiespeicher 4 zurückfliesst. Falls der Energiespeicher 4 durch Rekuperation voll geladen ist, speist das Fahrzeug 1 bei der nächsten Haltestelle mit Speiseeinheit 5 Energie an die stationäre Energieversorgung 6 zurück.

Bei einem Antrieb 3 mit Linearmotor kann der Linearmotor als Koppeltransformator 10 dienen, wobei wie oben dargestellt beispielsweise auf einer Haltestelle Energie vom stationären Motorenteil auf den fahrzeugseitigen Motorenteil übertragen wird. Vorteilhaft bei dieser Ausführungsvariante ist die Mehrfachnutzung bestehender Antriebsteile wie Linearmotor und Frequenzumrichter für den Antrieb des Fahrzeuges und für die Energieübertragung.

Zur drahtlosen Energieübertragung kann anstelle des Koppeltransformators 10 eine kapazitive Kopplung vorgesehen sein, bei der die Energieübertragung über den Luftspalt zwischen Kondensatorplatten erfolgt. Je Leitung ist ein Kondensator mit einer Platte auf der stationären Seite und einer Platte auf der Fahrzeugseite vorgesehen, wobei die Energieübertragung über den zwischen den Platten liegenden Luftspalt erfolgt.

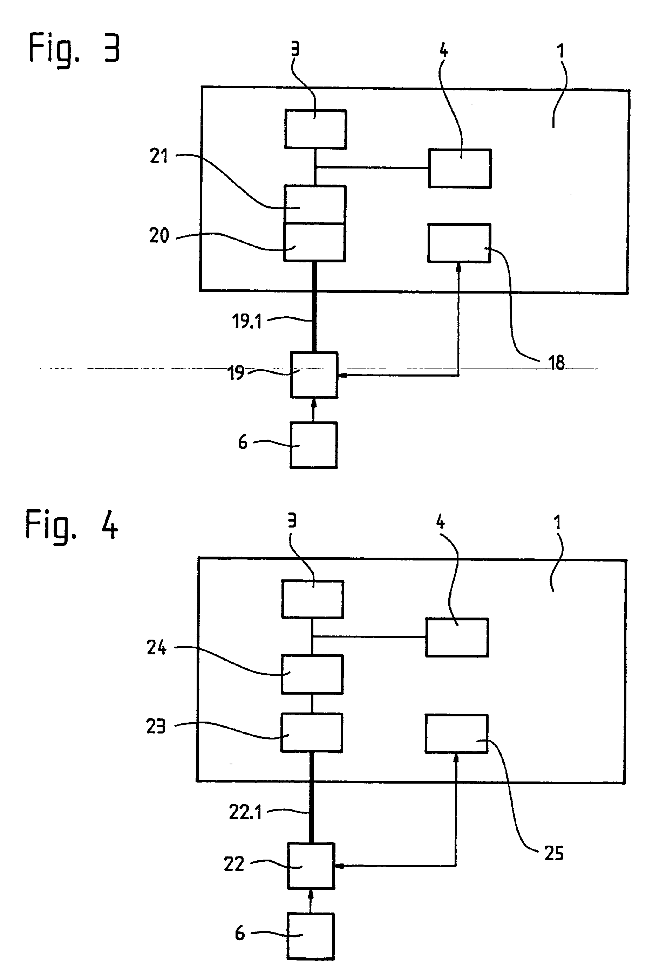

Fig. 3 zeigt ein weiteres Ausführungsbeispiel zur drahtlosen Energieübertragung von einer stationären Energieversorgung 6 auf ein Fahrzeug 1 als beweglicher Energieverbraucher. Eine von einer fahrzeugseitigen Steuerung 18 gesteuerte, stationäre Lasereinrichtung 19 sendet Licht 19.1 aus, das einen fahrzeugseitigen Absorber 20 erreicht, wobei das Licht 19.1 den Absorber 20 beispielsweise an jeder Fahrzeugposition oder nur an bestimmten Fahrzeugpositionen erreicht. Der Absorber 20 weist eine stark lichtabsorbierende Oberfläche auf und dient als Umsetzer der Lichtenergie in thermische Energie. Die thermische Energie wird mittels thermoelektrischem Element 21 in elektrische Energie umgesetzt, die mittels des Energiespeichers 4 zum Betrieb des Antriebes und somit zur Fortbewegung des Fahrzeuges 1 dient. Die Steuerung 18 steht in Verbindung mit der Lasereinrichtung 19 und sorgt dafür, dass Energie nur dann übertragen wird, wenn die Energie für die Ladung des Energiespeichers 4 und/oder für die Fortbewegung des Fahrzeuges 1 benötigt wird. Daten wie beispielsweise Energiemenge oder der Zeitpunkt der Energieübertragung werden von der Steuerung 18 aufgenommen. Als Absorber 20 kann beispielsweise ein Metallstück mit schwarzer Oberfläche dienen. Als thermoelektrisches Element 21 sind beispielsweise dafür geeignete Halbleiter verwendbar. Die Umsetzung von thermischer in elektrische Energie kann auch mittels eines Gases oder einer Flüssigkeit erfolgen, die mittels des Absorbers 20 erwärmt werden und bei Entspannung mechanische Energie an einen Stromgenerator abgeben.

Fig. 4 zeigt ein weiteres Ausführungsbeispiel zur drahtlosen Energieübertragung von einer stationären Energieversorgung 6 auf ein Fahrzeug 1 als beweglicher Energieverbraucher. Eine von einer fahrzeugseitigen Steuerung 18 gesteuerte, stationäre Mikrowelleneinrichtung 22 strahlt Wellen 22.1 hoher Frequenz ab, die von einer fahrzeugseitigen Antenne 23 aufgenommen und einem Demodulator 24 zugeführt werden, der die empfangenen Wellen 22.1 in Gleichspannung umwandelt, die mittels des Energiespeichers 4 zum Betrieb des Antriebes und somit zur Fortbewegung des Fahrzeuges 1 dient. Eine Steuerung 25 steht in Verbindung mit der Mikrowelleneinrichtung 22 und sorgt dafür, dass Energie nur dann übertragen wird, wenn die Energie für die Ladung des Energiespeichers 4 und/oder für die Fortbewegung des Fahrzeuges 1 benötigt wird. Daten wie beispielsweise Energiemenge oder der Zeitpunkt der Energieübertragung werden von der Steuerung 25 aufgenommen. Zur Erzeugung der Wellen 22.1 kann beispielsweise ein Magnetron dienen und zur Demodulation der Wellen 22.1 sind geeignete Halbleiter einsetzbar.

## Patentansprüche

1. Aufzugssystem mit einer Einrichtung zur Energieübertragung auf eine Aufzugskabine (1), wobei Energie einer stationären Energieversorgung (6) auf die Aufzugskabine (1) mit einem Antrieb (3) für die Fortbewegung der Aufzugskabine (1) übertragbar ist, wobei zwischen der stationären Energieversorgung (6) und der Aufzugskabine (1) eine drahtlose Energieübertragung vorgesehen ist, wobei die Energieübertragung während der Fahrt und/oder während des Stillstandes der Aufzugskabine (1) erfolgt **dadurch gekennzeichnet, dass**, ein Umsetzer (8,19,22) vorgesehen ist, der die zu übertragende Energie frequenzmässig auf ein höheres Niveau bringt.

2. Aufzugssystem nach Anspruch 1,
**dadurch gekennzeichnet,**
**dass** zur Energieübertragung ein Modulator (8) vorgesehen ist, der die Energie frequenzmässig auf ein höheres Niveau bringt und einem Koppeltransformator (10) mit einer stationären Primärseite (11) und einer fahrzeugseitigen Sekundärseite (13) zuführt, wobei die Energieübertragung über einen sich zwischen der Primärseite (11) und der Sekundärseite befindlichen Luftspalt (12) erfolgt und fahrzeugseitig einem Demodulator (14) zuführbar ist.

3. Aufzugssystem nach Anspruch 1,
**dadurch gekennzeichnet,**
**dass** eine kapazitive Energieübertragung vorgesehen ist, bei der die Energieübertragung über den Luftspalt zwischen Kondensatorplatten erfolgt.

4. Aufzugssystem nach Anspruch 1,
**dadurch gekennzeichnet,**
**dass** eine optische Energieübertragung vorgesehen ist, bei der die Energieübertragung mittels Licht (19.1) einer Lasereinrichtung (19) erfolgt, das fahrzeugseitig mittels Absorber (20) und thermoelektrischem Element (21) in elektrische Energie umsetzbar ist.

5. Aufzugssystem nach Anspruch 1,
**dadurch gekennzeichnet,**
**dass** eine Energieübertragung mittels Mikrowellen (22.1) einer Mikrowelleneinrichtung (22) vorgesehen ist, wobei die Mikrowellen (22.1) fahrzeugseitig mittels Antenne (23) und Demodulator (24) in elektrische Energie umsetzbar sind.

## Claims

1. Elevator system with a device for transmission of energy to an elevator car (1), energy from a stationary energy supply (6) being transferable to the elevator car (1) having a drive (3) for moving the elevator car (1), there being provided between the stationary energy supply (6) and the elevator car (1) a wireless means of transmitting energy, the transmission of energy taking place while the elevator car (1) is traveling and/or while it is at rest,
**characterized in that** a converter (8,19,22) is provided which raises the frequency of the energy for transmission to a higher level.

2. Elevator system according to Claim 1,
**characterized in that**
provided for the transmission of energy is a modulator (8) which raises the frequency of the energy to a higher level and transmits the energy to a coupling transformer (10) with a stationary primary (11) and a secondary on the vehicle (13), the energy transmission taking place across an air gap (12) between the primary (11) and the secondary and being transmittable to a demodulator (14) on the vehicle side.

3. Elevator system according to Claim 1,
**characterized in that**
a capacitive means of energy transmission is provided by means of which energy transmission takes place across the air gap between capacitor plates.

4. Elevator system according to Claim 1,
**characterized in that**
an optical means of energy transmission is provided by means of which energy transmission takes place by means of light (19.1) from a laser device (19) which on the vehicle side can be converted into electrical energy by means of an absorber (20) and a thermoelectric element (21).

5. Elevator system according to Claim 1,
**characterized in that**
a means of transmitting energy is provided which makes use of microwaves (22.1) of a microwave device (22), the microwaves (22.1) being convertible into electrical energy on the vehicle side by means of an antenna (23) and demodulator (24).

## Revendications

1. Système d'ascenseur avec un dispositif de transmission d'énergie pour une cabine d'ascenseur (1), dans lequel l'énergie d'une alimentation en énergie stationnaire (6) est apte à être transmise à la cabine d'ascenseur (1) pourvue d'un entraînement (3) pour le déplacement de ladite cabine (1), étant précisé qu'il est prévu entre l'alimentation stationnaire (6) et la cabine d'ascenseur (1) une transmission d'énergie sans fil, et que la transmission d'énergie se fait pendant le trajet et/ou pendant l'arrêt de la cabine (1),
**caractérisé en ce qu'**il est prévu un transformateur (8, 19, 22) qui amène à un niveau de fréquence plus élevé l'énergie à transmettre.

2. Système d'ascenseur selon la revendication 1, **caractérisé en ce que** pour la transmission d'énergie, il est prévu un modulateur (8) qui amène l'énergie à un niveau de fréquence plus élevé et la transmet à un transformateur de couplage (10) comportant un côté primaire stationnaire (11) et un côté secondaire (13) prévu côté véhicule, la transmission d'énergie se faisant par l'intermédiaire d'un entrefer (12) qui se trouve entre le côté primaire (11) et le côté secondaire, et pouvant être amenée, côté véhicule, vers un démodulateur (14).

3. Système d'ascenseur selon la revendication 1, **caractérisé en ce qu'**il est prévu une transmission d'énergie capacitive, avec laquelle la transmission d'énergie se fait par l'intermédiaire de l'entrefer entre des plaques de condensateur.

4. Système d'ascenseur selon la revendication 1, **caractérisé en ce qu'**il est prévu une transmission d'énergie optique avec laquelle la transmission d'énergie se fait à l'aide de la lumière (19.1) d'un dispositif laser (19), qui est apte à être transformée, côté véhicule, en énergie électrique grâce à un absorbeur (20) et à un élément thermoélectrique (21).

5. Système d'ascenseur selon la revendication 1, **caractérisé en ce qu'**il est prévu une transmission d'énergie à l'aide de micro-ondes (22.1) d'un dispositif à micro-ondes (22), les micro-ondes (22.1) étant aptes à être transformées, côté véhicule, en énergie électrique grâce à une antenne (23) et à un démodulateur (24).
